Europäisches Patentamt

European Patent Office

Office européen des brevets

(19)

(11) Numéro de publication : **0 571 519 B1**

(12)

# FASCICULE DE BREVET EUROPEEN

(45) Date de publication du fascicule du brevet :
27.07.94 Bulletin 94/30

(51) Int. Cl.⁵ : **G01F 23/28**

(21) Numéro de dépôt : **92906651.2**

(22) Date de dépôt : **13.02.92**

(86) Numéro de dépôt international :
**PCT/FR92/00136**

(87) Numéro de publication internationale :
**WO 92/14996 03.09.92 Gazette 92/23**

(54) **PROCEDE ET DISPOSITIF POUR LA MESURE ET LA SURVEILLANCE DU NIVEAU D'UN LIQUIDE, A PARTIR D'UN REPERE FIXE, AU MOYEN DES ULTRASONS.**

(30) Priorité : **13.02.91 FR 9101654**

(43) Date de publication de la demande :
**01.12.93 Bulletin 93/48**

(45) Mention de la délivrance du brevet :
**27.07.94 Bulletin 94/30**

(84) Etats contractants désignés :
**BE ES FR GB IT SE**

(56) Documents cités :
**EP-A- 0 106 677**
**EP-A- 0 384 373**
**DE-A- 3 724 411**
**DE-C- 878 723**
**US-A- 4 934 186**

(73) Titulaire : **Société Française de Stockage Géologique "GEOSTOCK"**
**7, rue E. et A. Peugeot**
**F-92563 Rueil Malmaison Cédex (FR)**
Titulaire : **ULTRAFLUX**
**17, rue Charles Edouard Jeanneret**
**F-78300 Poissy (FR)**

(72) Inventeur : **OLIVIER, Philippe**
**7, rue E.- et A.-Peugeot**
**F-92563 Rueil-Malmaison Cédex (FR)**
Inventeur : **ALLAIN, Gérard**
**63, rue du Général-de-Gaulle**
**F-78300 Poissy (FR)**

(74) Mandataire : **Pinguet, André et al**
**CAPRI sàrl,**
**94 avenue Mozart**
**F-75016 Paris (FR)**

**Description**

La présente invention concerne la mesure et la surveillance du niveau d'un liquide, à partir d'une cote de repère fixe, au moyen des ultrasons. On sait que les ultrasons émis au sein d'un liquide sont partiellement réfléchis aux interfaces de ce liquide avec un autre fluide, un gaz ou un autre liquide non miscible avec le premier. Si l'on dispose dans le liquide un émetteur d'ultrasons orienté vers une interface du liquide (vers le haut ou vers le bas) et un capteur pour recevoir l'onde réfléchie, la mesure du temps de parcours entre l'émetteur et le capteur, dont les positions sont connues, permet de connaître la distance entre l'émetteur (ou le capteur) et l'interface, si l'on connait la vitesse de propagation de l'onde dans le liquide. En particulier, ce principe peut être utilisé pour repérer ou surveiller le niveau d'un gaz de pétrole liquéfié, dans un stockage, dans lequel la phase liquide se trouve entre une couche d'eau inférieure et un ciel de gaz en équilibre avec la phase liquide. A partir d'un point situé dans la phase liquide, on émet des ultrasons vers le haut et vers le bas pour déterminer le niveau inférieur et le niveau supérieur du gaz liquide. La vitesse de l'onde dans la phase liquide, qu'il est nécessaire de connaître pour déterminer la position d'une interface, dépend de différents paramètres : la composition du gaz, sa température, sa pression. Il faut donc prendre ces facteurs en considération.

Pour ce faire, on connait un procédé de répérage du niveau de séparation ou interface, de position inconnue, entre un liquide et un autre fluide, liquide ou gaz, dans lequel procédé, on procède par émission vers l'interface, à partir d'un point de repère situé dans le liquide, d'une onde formée par ultrasons, réflexion de l'onde sur l'interface, et captage de l'onde réfléchie, de préférence au même point de repère, pour définir un parcours de mesure; on mesure le temps de ce parcours par l'onde; on émet à partir d'un point de répère (le même ou non) situé dans ledit liquide une onde identique vers un réflecteur, disposé à un emplacement connu au sein dudit liquide, et on capte l'onde réfléchie pour définir un parcours de référence de longueur connue, et on mesure le temps de ce parcours de référence par l'onde dans les mêmes conditions; on en déduit la longueur du parcours de mesure à partir du rapport des temps du parcours de mesure et du parcours de référence, et de la longueur connue du parcours de référence.

En particulier, il est connu, notamment par le brevet DE 878 723 et par le brevet européen 0 106 677, un procédé dans lequel

- on dispose plusieurs réflecteurs à différentes distances fixées,
- on utilise le temps du parcours de mesure pour déterminer un réflecteur de référence qui est celui des réflecteurs qui est le plus proche de l'interface, à une distance de l'émetteur inférieure à celle de l'interface, et
- on déduit la longueur du parcours de mesure en utilisant le temps de parcours du réflecteur de référence.

Dans ces exemples, la température du stockage est, après utilisation, de l'ordre de 15 à 18°. Il est courant lors d'un remplissage, de déverser du liquide à 2° par exemple. Il se produit un brassage, les températures sont irrégulières, et la surface est agitée.

La simple extrapolation peut donc conduire à une imprécision sur la mesure du niveau. Compte tenu des surfaces souvent importantes des stockages souterrains, une erreur même faible peut correspondre à de grandes quantité de gaz liquéfié. L'invention a pour but un procédé et un dispositif pour améliorer la précision de la mesure.

L'invention a pour objet un procédé de repérage d'une interface entre un liquide et un autre fluide, liquide ou gazeux, comportant les étapes suivantes :

- émettre une première onde ultrasonore émise, depuis un premier point de repère situé dans le liquide, vers ladite interface, ladite première onde ultrasonore émise produisant une première onde réfléchie sur ladite interface,
- recevoir ladite première onde réfléchie audit premier point de repère,
- mesurer un temps t de parcours de mesure écoulé entre l'émission de ladite première onde ultrasonore émise et la réception de ladite première onde réfléchie,
- émettre une deuxième onde ultrasonore émise, depuis un deuxième point de repère situé dans le liquide vers ladite interface, ledit deuxième point de repère étant aligné horizontalement avec le premier point de repère, des réflecteurs étant disposés alignés verticalement avec le deuxième point de repère entre ledit deuxième point de repère et ladite interface, lesdits réflecteurs comportant un dernier réflecteur et un avant-dernier réflecteur rencontrés par ladite deuxième onde ultrasonore entre ledit deuxième point de repère et ladite interface, ladite deuxième onde ultrasonore produisant une deuxième onde réfléchie sur ledit avant-dernier réflecteur et une troisième onde réfléchie sur ledit dernier réflecteur,
- recevoir lesdites deuxième et troisième ondes réfléchies audit deuxième point de repère,
- déterminer quel est le dernier réflecteur, parmi les différents réflecteurs,
- mesurer un premier temps $t_3$ de parcours de référence entre l'émission de la deuxième onde ultrasonore émise et la réception de la troisième onde réfléchie, ledit procédé étant caractérisé en ce qu'il comporte en outre les étapes suivantes:
- mesurer un deuxième temps $t_2$ de parcours de référence entre l'émission de la deuxième onde ultrasonore émise et la réception de la deuxième onde réfléchie, et

- calculer une hauteur H de l'interface (8), par la formule :

$$H = H_3 + (H_3 - H_2) \times (t - t_3)/(t_3 - t_2),$$

où :

$H_2$ est une hauteur de l'avant-dernier réflecteur, et

$H_3$ est une hauteur du dernier réflecteur.

L'invention a aussi pour objet un dispositif de repérage d'une interface entre un liquide et un autre fluide, liquide ou gazeux, comportant:

- des moyens pour émettre une première onde ultrasonore émise, depuis un premier point de repère situé dans le liquide, vers ladite interface, ladite première onde ultrasonore émise produisant une première onde réfléchie sur ladite interface,
- des moyens pour recevoir ladite première onde réfléchie audit premier point de repère,
- des moyens pour mesurer un temps t de parcours de mesure écoulé entre l'émission de ladite première onde ultrasonore émise et la réception de ladite première onde réfléchie,
- des moyens pour émettre une deuxième onde ultrasonore émise, depuis un deuxième point de repère situé dans le liquide vers ladite interface, ledit deuxième point de repère étant aligné horizontalement avec le premier point de repère, des réflecteurs étant disposés alignés verticalement avec le deuxième point de repère entre ledit deuxième point de repère et ladite interface, lesdits réflecteurs comportant un dernier réflecteur et un avant-dernier réflecteur rencontrés par ladite deuxième onde ultrasonore entre ledit deuxième point de repère et ladite interface, ladite deuxième onde ultrasonore produisant une deuxième onde réfléchie sur ledit avant-dernier réflecteur et une troisième onde réfléchie sur ledit dernier réflecteur,
- des moyens pour recevoir lesdites deuxième et troisième ondes réfléchies audit deuxième point de repère,
- des moyens pour déterminer quel est le dernier réflecteur, parmi les différents réflecteurs,
- des moyens pour mesurer un premier temps $t_3$ de parcours de référence entre l'émission de la deuxième onde ultrasonore émise et la réception de la troisième onde réfléchie,

ledit dispositif étant caractérisé en ce qu'il comporte en outre :

- des moyens pour mesurer un deuxième temps $t_2$ de parcours de référence entre l'émission de la deuxième onde ultrasonore émise et la réception de la deuxième onde réfléchie, et
- des moyens pour calculer une hauteur H de l'interface, par la formule :

$$H = H_3 + (H_3 - H_2) \times (t - t_3) / (t_3 - t_2),$$

où:

$H_2$ est une hauteur de l'avant-dernier réflecteur, et

$H_3$ est une hauteur du dernier réflecteur.

D'autres caractéristiques et avantages de l'invention apparaîtront au cours de la description qui va suivre, donnée à titre d'exemple non limitatif, en regard des dessins ci-joints, et qui fera bien comprendre comment l'invention peut être réalisée.

Sur les dessins,

la figure 1 est une vue en coupe schématique, non à l'échelle par un plan vertical d'un stockage de gaz de pétrole liquéfié (GPL) équipé d'un dispositif classique de repérage des niveaux et constituant un exemple d'un système auquel peut s'appliquer la présente invention,

la figure 2 est une vue en coupe par un plan horizontal d'un dispositif selon l'invention,

la figure 3 est une vue en coupe suivant la ligne IV-IV de la figure 3, et

les figures 4A à 4G sont des vues, chacune en plan et en coupe de différents réflecteurs d'ondes utilisables dans le dispositif de la présente invention, disposés aux repères A à G de la figure 1.

De façon classique, on choisit pour le tarage de la sonde, un réflecteur qui sera désigné ci-après réflecteur de référence, qui est le réflecteur le plus proche du niveau à repérer tout en étant dans le même liquide, pour avoir un parcours de référence de l'écho de longueur aussi voisine que possible de celle du parcours de l'écho de mesure, et dans un milieu présentant les conditions de température et autres paramètres, aussi voisin que le milieu où se fait la mesure. Pour cela, il est prévu de disposer plusieurs réflecteurs, et de choisir à chaque mesure, celui qui convient le mieux.

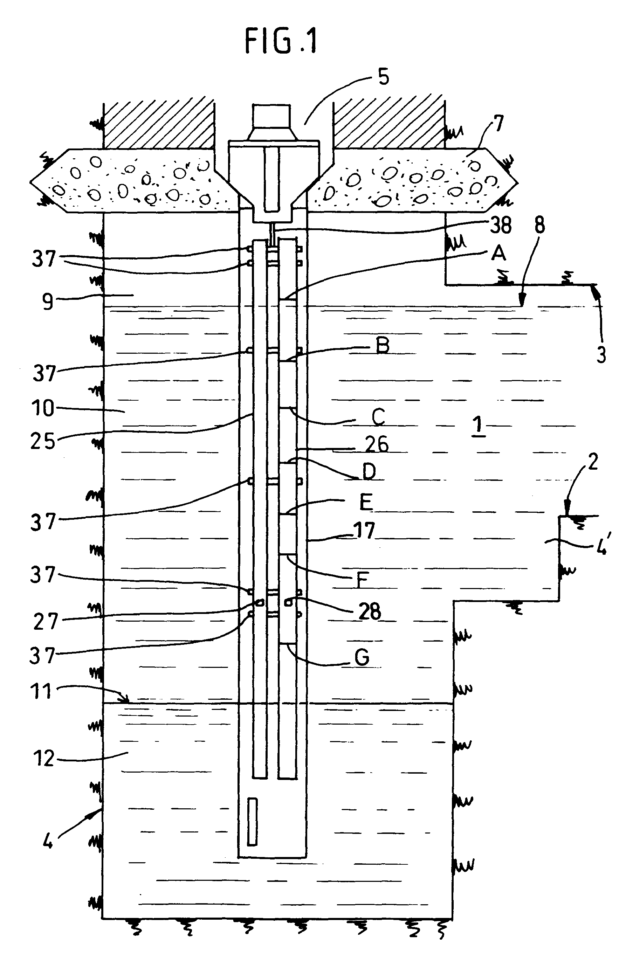

Le stockage représenté sur la figure 1 comporte une cavité 1, définie par un radier 2 et un plafond 3, reliée au sol par un puits 5 - la hauteur entre radier et plafond peut être par exemple de 20 mètres et la profondeur du puits peut dépasser 100 mètres. Les proportions ne peuvent donc être respectées sur ce dessin. Cette cavité comporte un puisard 4, éventuellement avec un élargissement 4' à la partie supérieure, situé dans l'axe du puits 5. Un bouchon de béton 7 isole le stockage, avec des traversées étanches appropriées pour les tubes et câbles d'exploitation. On a représenté sur cette figure le dispositif connu de repérage du niveau 8, qui sépare la phase gazeuse 9 de la phase liquide 10, et du niveau 11 qui sépare la phase liquide 10 de l'eau 12 qui reste au fond du puisard.

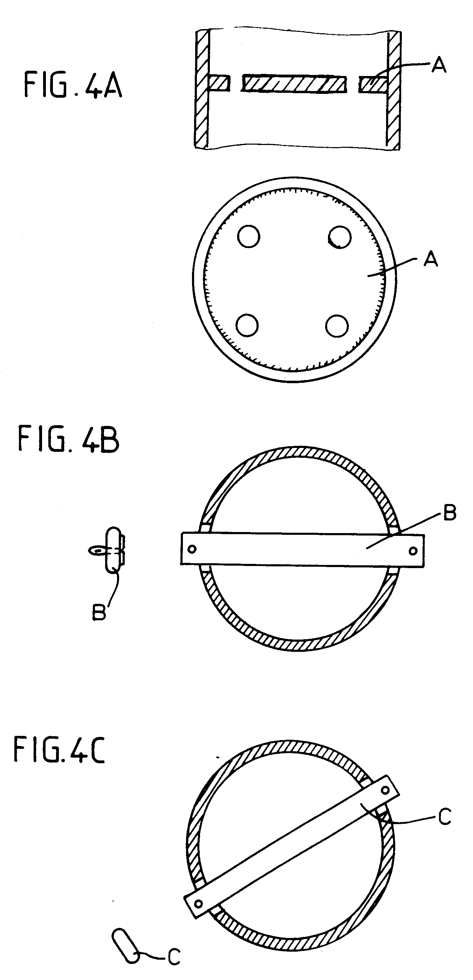

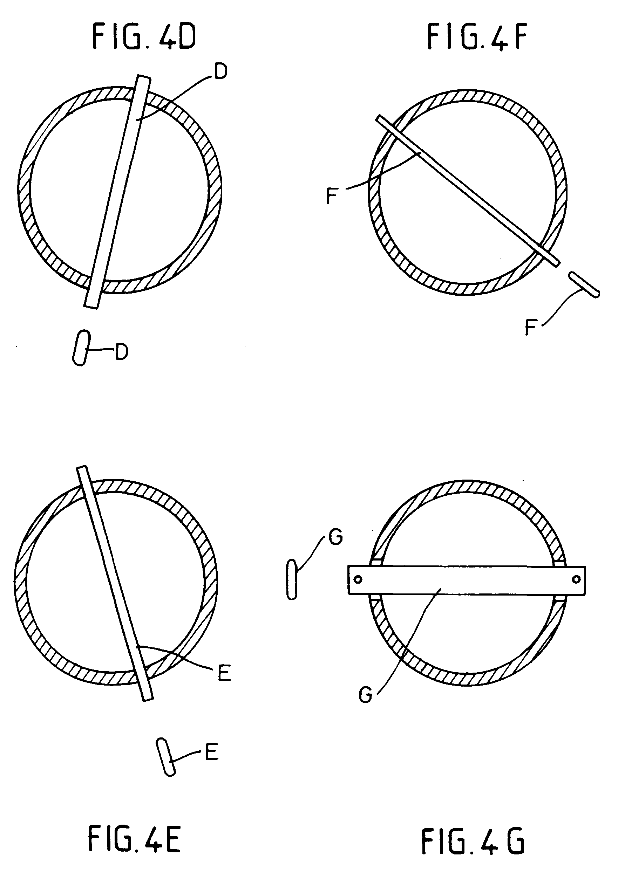

Dans le stockage de gaz liquéfié représenté sur la figure 1, comme exemple d'application du procédé et du dispositif selon l'invention, il est prévu deux guides d'onde parallèles, un guide d'onde de mesure 25 et un guide d'onde de référence 26, chaque guide étant équipé d'un capteur à deux sondes à ultrasons 27, 28, l'une dirigée vers le haut, l'autre vers le bas. La présence des deux guides est préférable, mais pas essentielle selon l'invention. L'utilisation de plusieurs capteurs interférant sur le parcours de référence rend préférable d'utiliser pour le parcours de la mesure un tube guide d'onde différent, pour simplifier la discrimination des échos sur le capteur de mesure. Les deux guides 25, 26 sont munis d'ouvertures appropriées pour permetre l'équilibre hydrostatique, en nombre limité pour réduire les échos parasites. Le guide de mesure 25, parfaitement lisse, associé à sa sonde 27 permet de recueillir l'écho sur les interfaces stabilisées. Le guide de référence 26, en équilibre parfait de pression et de température avec le précédent est équipé de réflecteurs A, B, C, D, E, F, G, en nombre fonction de la taille de la cavité, judicieusement conçus et disposés sur toute la hauteur de la caverne, et choisis en tailles (voir figures 4A à 4G), afin de pouvoir recevoir tous les échos et discriminer facilement le premier écho sur un réflecteur, des échos suivants; afin d'assurer à coup sûr la sélection d'un réflecteur dans les conditions extrêmes de température; afin d'obtenir un niveau d'écho comparable quelque soit la distance; afin de minimiser l'ombre d'un réflecteur sur les suivants. Le réflecteur A, le plus haut est situé en dessous du niveau du toit de la caverne, niveau le plus haut susceptible d'être atteint.

Un réflecteur unique G est disposé vers le bas. Il aura surtout pour intérêt d'assurer les performances du système aux niveaux de stockage les plus bas.

La répartition des réflecteurs vers le haut pourra être faite en fonction des niveaux les plus fréquents que l'on peut prévoir. Elle peut être uniforme ou en progression géométrique, ou fonction des gradients de température. Selon une caractéristique de l'invention, les réflecteurs sont séparés par des écarts différents, avantageusement croissant vers le haut pour faciliter la discrimination des échos.

L'électronique associée est entièrement gérée par micro-processeur et entièrement programmable (cotes mécaniques, échelles, gains,...).

Cette électronique est multiplexée sur les quatre sondes. Dans la technique connue, l'algorithme de calcul est le suivant :
- mesures brutes dans le tube lisse $\Rightarrow$ t (temps de mesure)
  $\Rightarrow$ validation approximative du réflecteur immédiatement inférieur au niveau de GPL
- mesure sur les divers réflecteurs en partant du plus proche de la sonde
  $\Rightarrow$ analyse de cohérence (compte tenu des cotes)
  $\Rightarrow$ validation définitive du réflecteur choisi $(Href_i)$
  $\Rightarrow$ mesure du temps d'écho correspondant

$(tref_i)$ (temps de référence)
- calcul du niveau

$$H = t \times \frac{Href_i}{tref_i} = t \times Cref_i$$

Le rapport Href sur tref mesure la célérité des ultrasons sur le parcours aller et retour du réflecteur de référence, c'est-à-dire c'est la célérité de référence. On déduit la hauteur du parcours de mesure en utilisant la célérité de référence, ou célérité moyenne du son sur le parcours aller et retour du réflecteur de référence.

Selon l'invention, il y a au moins deux réflecteurs dans le milieu liquide, entre la sonde et la surface, et on utilise la mesure de la vitesse du son entre les deux derniers réflecteurs pour déterminer la tendance ou le gradient de façon à extrapoler avec plus de précision la hauteur du liquide au-dessus du dernier réflecteur.

Ainsi, soit $H_3$ et $H_2$ les hauteurs des deux derniers réflecteurs, H la hauteur à mesurer est donnée par la relation

$$H = H_3 + (H_3 - H_2) \frac{t - t_3}{t_3 - t_2}$$

$t_3$ et $t_2$ étant les temps mis par l'onde pour atteindre le dernier et l'avant-dernier réflecteur et revenir au capteur.

L'électronique gère aussi ces opérations.

La hauteur de la caverne peut imposer d'utiliser des guides d'ondes constitués de plusieurs tronçons de tubes raccordés les uns aux autres.

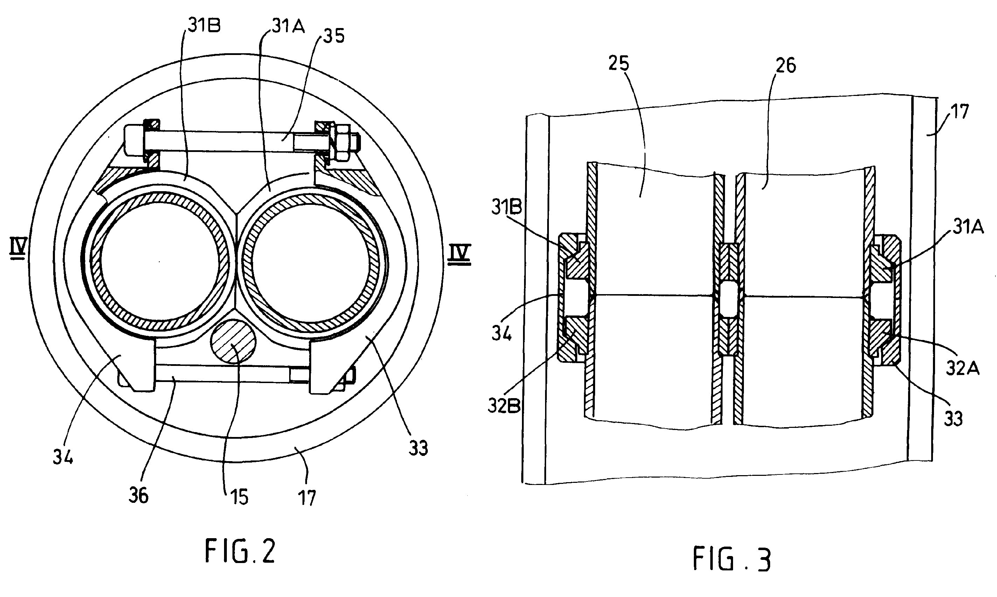

Afin de limiter les échos parasites, les sections de raccordement des tronçons de tubes sont biseautées (voir figure 3). On évite ainsi les échos parasites aux niveaux des joints.

Pour raccorder les tronçons de tubes et les maintenir stables et en vue d'obtenir un encombrement réduit, car les dimensions du passage disponible n'admettent pas facilement l'emploi de moyens classiques, (figures 2 et 3), on soude autour des tubes 25, 26, et au voisinage des extrémités des tronçons à raccorder, des bagues 31A, 31B, 32A, 32B, et ces bagues sont réunies quatre à quatre au moyen d'une frette constituée par exemple de deux étriers 33, 34, serrés ensemble par des boulons 35, 36 : on réalise ainsi les raccordements des deux extrémités inférieures des deux tronçons supérieurs de guide de mesure et de guide de référence, et les deux extrémités supérieures des deux tronçons inférieurs. La frette maintient ainsi les deux guides d'onde l'un contre l'autre et assure en même temps la continuité mécanique de chaque guide, avec la qualité acoustique requise. L'ensemble se loge dans le cuvelage 17, et peut ainsi servir de guide au câble d'instrument 15. De tels raccords sont indiqués sur la figure 1 en 37. Le raccord supérieur est muni de moyens 38 pour suspendre les guides 25, 26 à un clapet ou autre organe soutenu par le bouchon de béton 7, ou à un système de suspension accroché à un point quelconque du cuvelage ou du puits.

On va décrire maintenant, à titre d'exemple, en se référant aux figures 4A à 4G une série de réflecteurs, conçus pour être utilisés ensemble. La taille d'un réflecteur doit être modulée avec la distance, théoriquement avec son carré en espace libre. Ici, compte tenu du guide d'onde, ceci peut être négligé. D'autre part, le réflecteur doit avoir une largeur supérieure ou égale à $\lambda/2$, soit 1,8 mm. Les réflecteurs peuvent être constitués par des lames de métal rectangulaires, en forme de baguettes plates ou de règles, engagées chacune dans deux fentes opposées pratiquées l'une en face de l'autre, au même niveau dans le guide et maintenues par des goupilles placées à l'extérieur, à l'exception du réflecteur supérieur A (figure 4A) qui peut être presque total, et former une couronne soit un disque avec au moins une ouverture de préférence non centrale, parce que l'écho se réfléchit principalement au centre de la section. Un tel réflecteur évite la tombée de corps solides dans le guide. Cette couronne peut être soudée à l'intérieur du guide. Ainsi, les réflecteurs ont des largeurs décroissantes vers le bas, sauf bien entendu le réflecteur G qui est situé en dessous des sondes. Les réflecteurs les plus étroits, D, E, F sont placés sur chant, pour garder une rigidité suffisante. Comme représenté, les écarts entre les réflecteurs vont en croissant vers le haut, pour faciliter la discrimination entre les échos.

**Revendications**

1. Procédé de repérage d'une interface (8) entre un liquide (10) et un autre fluide (9), liquide ou gazeux, comportant les étapes suivantes :
   - émettre une première onde ultrasonore émise, depuis un premier point de repère (27) situé dans le liquide (10), vers ladite interface (8), ladite première onde ultrasonore émise produisant une première onde réfléchie sur ladite interface (8),
   - recevoir ladite première onde réfléchie audit premier point de repère (27),
   - mesurer un temps t de parcours de mesure écoulé entre l'émission de ladite première onde ultrasonore émise et la réception de ladite première onde réfléchie,
   - émettre une deuxième onde ultrasonore émise, depuis un deuxième point de repère (28) situé dans le liquide (10) vers ladite interface (8), ledit deuxième point de repère (28) étant aligné horizontalement avec le premier point de repère (27), des réflecteurs (A-F) étant disposés alignés verticalement avec le deuxième point de repère (28) entre ledit deuxième point de repère (28) et ladite interface (8), lesdits réflecteurs (A-F) comportant un dernier réflecteur (B) et un avant-dernier réflecteur (C) rencontrés par ladite deuxième onde ultrasonore entre ledit deuxième point de repère (28) et ladite interface (8), ladite deuxième onde ultrasonore produisant une deuxième onde réfléchie sur ledit avant-dernier réflecteur (C) et une troisième onde réfléchie sur ledit dernier réflecteur (B),
   - recevoir lesdites deuxième et troisième ondes réfléchies audit deuxième point de repère (28),
   - déterminer quel est le dernier réflecteur (B), parmi les différents réflecteurs (A-F),
   - mesurer un premier temps $t_3$ de parcours de référence entre l'émission de la deuxième onde ultrasonore émise et la réception de la troisième onde réfléchie, ledit procédé étant caractérisé en ce qu'il comporte en outre les étapes suivantes:
   - mesurer un deuxième temps $t_2$ de parcours de référence entre l'émission de la deuxième onde ultrasonore émise et la réception de la deuxième onde réfléchie, et
   - calculer une hauteur H de l'interface (8), par la formule :

   $$H = H_3 + (H_3 - H_2) \times (t - t_3) / (t_3 - t_2),$$
   où:

   $H_2$ est une hauteur de l'avant-dernier réflecteur (C), et

   $H_3$ est une hauteur du dernier réflecteur (B).

2. Procédé selon la revendication 1, dans lequel on détermine quel est le dernier réflecteur (B), parmi les différents réflecteurs (A-F), en fonction du temps t de parcours de mesure.

3. Dispositif de repérage d'une interface (8) entre un liquide (10) et un autre fluide (9), liquide ou gazeux, comportant:
   - des moyens pour émettre une première onde ultrasonore émise, depuis un premier point de repère (27) situé dans le liquide (10), vers ladite interface (8), ladite première onde ultrasonore émise produisant une première onde réfléchie sur ladite interface (8),
   - des moyens pour recevoir ladite première onde réfléchie audit premier point de repère (27),
   - des moyens pour mesurer un temps t de parcours de mesure écoulé entre l'émission de ladite première onde ultrasonore émise et la réception de ladite première onde réfléchie,
   - des moyens pour émettre une deuxième onde ultrasonore émise, depuis un deuxième point de repère (28) situé dans le liquide (10) vers ladite interface (8), ledit deuxième point de repère (28) étant aligné horizontalement avec le premier point de repère (27), des réflecteurs (A-F) étant disposés alignés verticalement avec le deuxième point de repère (28) entre ledit deuxième point de repère (28) et ladite interface (8), lesdits réflecteurs (A-F) comportant un dernier réflecteur (B) et un avant-dernier réflecteur (C) rencontrés par ladite deuxième onde ultrasonore entre ledit deuxième point de repère (28) et ladite interface (8), ladite deuxième onde ultrasonore produisant une deuxième onde réfléchie sur ledit avant-dernier réflecteur (C) et une troisième onde réfléchie sur ledit dernier réflecteur (B),
- des moyens pour recevoir lesdites deuxième et troisième ondes réfléchies audit deuxième point de repère (28),
- des moyens pour déterminer quel est le dernier réflecteur (B), parmi les différents réflecteurs (A-F),
- des moyens pour mesurer un premier temps $t_3$ de parcours de référence entre l'émission de la deuxième onde ultrasonore émise et la réception de la troisième onde réfléchie,

ledit dispositif étant caractérisé en ce qu'il comporte en outre :
- des moyens pour mesurer un deuxième temps $t_2$ de parcours de référence entre l'émission de la deuxième onde ultrasonore émise et la réception de la deuxième onde réfléchie, et
- des moyens pour calculer une hauteur H de l'interface (8), par la formule:

$$H = H_3 + (H_3 - H_2) \times (t - t_3) / (t_3 - t_2),$$

où:

$H_2$ est une hauteur de l'avant-dernier réflecteur (C), et

$H_3$ est une hauteur du dernier réflecteur (B).

4. Dispositif selon la revendication 3, comportant un premier guide d'onde (25) pour guider ladite première onde ultrasonore émise et ladite première onde réfléchie, et un deuxième guide d'onde (26) pour guider la deuxième onde ultrasonore émise et lesdites deuxième et troisième ondes réfléchies.

5. Dispositif selon la revendication 4, dans lequel au moins un réflecteur (B, C, D, E, F) est constitué par une lame plane, engagée dans deux fentes opposées pratiquées l'une en face de l'autre au même niveau dans le deuxième guide d'onde.

6. Dispositif selon la revendication 5, dans lequel au moins un réflecteur (A) est constitué par un disque comportant au moins une ouverture.

7. Dispositif selon une des revendications 4 à 6, dans lequel les guides d'onde (25, 26) comportent chacun plusieurs tronçons raccordés par des sections coniques.

8. Dispositif selon une des revendications 4 à 7, caractérisé en ce que les guides d'onde (25, 26) comportent chacun plusieurs tronçons juxtaposés, chaque tronçon comportant au voisinage de chacune de ses extrémités une bague circulaire (31, 32), les deux guides sont placés l'un près de l'autre en mettant l'une contre l'autre les deux bagues d'extrémité (31B, 31A) d'un tronçon du premier guide et d'un tronçon parallèle du deuxième guide, ainsi que les deux bagues d'extrémité (32B, 32A) des tronçons adjacents du premier guide et du deuxième guide, les quatre bagues (31A, 31B, 32A, 32B) étant maintenues ensemble par une frette (33, 34).

9. Dispositif selon la revendication 8, dans lequel ladite frette comporte deux étriers (33, 34) serrés par deux boulons (35, 36).

10. Dispositif selon une des revendications 3 à 9, caractérisé en ce que les distances entre les réflecteurs (A-F) considérées dans leur direction d'alignement vont en augmentant dans la direction de propagation des ondes émises.

**Patentansprüche**

1. Verfahren zum Bestimmen einer Grenzfläche (8) zwischen einer Flüssigkeit (10) und einem anderen, flüssigen oder gasförmigen Fluid (9), umfassend die folgenden Schritte:
- Senden einer ersten, emittierten Ultraschallwelle von einem ersten, in der Flüssigkeit (10) gelegenen Kennpunkt (27) zu der Grenzfläche (8), wobei diese erste emittierte Ultraschallwelle eine erste an der Grenzfläche (8) reflektierte Welle erzeugt;
- Empfangen der ersten reflektierten Welle an dem ersten Kennpunkt (27),
- Messen einer zwischen dem Senden dieser ersten emittierten Ultraschallwelle und dem Empfangen der ersten reflektierten Welle abgelaufenen Meßstreckenzeit t,
- Senden einer zweiten emittierten Ultraschallwelle von einem zweiten in der Flüssigkeit (10) gelegenen Kennpunkt (28) zu der Grenzfläche (8), wobei der zweite Kennpunkt (28) zu dem ersten Kennpunkt (27) horizontal ausgerichtet ist, wobei Reflektoren (A-F) vertikal zu dem zweiten Kennpunkt (28) ausgerichtet zwischen diesem zweiten Kennpunkt (28) und der Grenzfläche (8) angeordnet sind und diese Reflektoren (A-F) einen letzten Reflektor (B) und einen vorletzten Reflektor (C) umfassen, die von der zweiten Ultraschallwelle zwischen dem zweiten Kennpunkt (28) und der Grenzfläche (8) getroffen werden, wobei diese zweite Ultraschallwelle an dem vorletzten Reflektor (C) eine zweite reflektierte Welle und an an dem letzten Reflektor (B) eine dritte reflektierte Welle erzeugt,

- Empfangen dieser zweiten und dritten reflektierten Welle in dem zweiten Kennpunkt (28),

- Feststellen, welcher von den verschiedenen Reflektoren (A-F) der letzte Reflektor (B) ist,

- Messen einer ersten Vergleichsstreckenzeit $t_3$ zwischen dem Senden der zweiten emittierten Ultraschallwelle und dem Empfangen der dritten reflektierten Welle, wobei dieses Verfahren dadurch **gekennzeichnet** ist, daß es unter anderem die folgenden Schritte umfaßt:

- Messen einer zweiten Vergleichsstreckenzeit $t_2$ zwischen dem Senden der zweiten emittierten Ultraschallwelle und dem Empfangen der zweiten reflektierten Welle, und

- Berechnen einer Höhe H der Grenzfläche (8) mit der Formel:
  $H = H_3 + (H_3 - H_2) \times (t - t_3)/(t_3 - t_2)$,
  wobei $H_2$ eine Höhe des vorletzten Reflektors (C) und $H_3$ eine Höhe des letzten Reflektors (B) ist.

2. Verfahren nach Anspruch 1, bei welchem man in Abhängigkeit von der Meßstreckenzeit t bestimmt, welcher der letzte Reflektor (B) unter den verschiedenen Reflektoren (A-F) ist.

3. Einrichtung zum Feststellen einer Grenzfläche (8) zwischen einer Flüssigkeit (10) und einem anderen, flüssigen oder gasförmigen Fluid (9), umfassend:

- Mittel zum Senden einer ersten emittierten Ultraschallwelle von einem ersten, in der Flüssigkeit (10) gelegenen Kennpunk (27) zu der Grenzfläche (8), wobei die erste emittierte Ultraschallwelle eine erste an dieser Grenzfläche (8) reflektierte Welle erzeugt,

- Mittel zum Empfangen dieser ersten reflektierten Welle in dem ersten Kennpunkt (27),

- Mittel zum Messen einer zwischen dem Senden der ersten emittierten Ultraschallwelle und dem Empfangen der ersten reflektierten Welle abgelaufenen Meßstreckenzeit t,

- Mittel zum Senden einer zweiten emittierten Ultraschallwelle von einem zweiten, in der Flüssigkeit (10) gelegenen Kennpunkt (28) zu der Grenzfläche (8), wobei dieser zweite Kennpunkt (28) horizontal zu dem ersten Kennpunkt (27) ausgerichtet ist, wobei Reflektoren (A-F) vertikal zu dem zweiten Kennpunkt (28) ausgerichtet zwischen dem zweiten Kennpunkt (28) und der Grenzfläche (8) angeordnet sind und diese Reflektoren (A-F) einen letzten Reflektor (B) und einen vorletzten Reflektor (C) umfassen, die von der zweiten Ultraschallwelle zwischen dem zweiten Kennpunkt (28) und der Grenzfläche (8) getroffen werden, wobei diese zweite Ultraschallwelle eine an dem vorletzten Reflektor (C) reflektierte zweite Welle und eine an dem letzten Reflektor (B) reflektierte dritte Welle erzeugt,

- Mittel zum Empfangen dieser zweiten und dritten reflektierten Welle in dem zweiten Kennpunkt (28),

- Mittel zum Bestimmen, welcher der letzte Reflektor (B) unter den verschiedenen Reflektoren (A-F) ist,

- Mittel zum Messen einer ersten Vergleichsstreckenzeit $t_3$ zwischen dem Senden der zweiten emittierten Ultraschallwelle und dem Empfangen der dritten reflektierten Welle, wobei die Vorrichtung dadurch **gekennzeichnet** ist, daß sie unter anderem umfaßt:

- Mittel zum Messen einer zweiten Vergleichsstreckenzeit $t_2$ zwischen dem Senden der zweiten emittierten Ultraschallwelle und dem Empfangen der zweiten reflektierten Welle, und

- Mittel zum Berechnen einer Höhe H für die Grenzfläche (8) unter Verwendung der Formel:
  $H = H_3 + (H_3 - H_2) \times (t - t_3)/(t_3 - t_2)$,
  wobei $H_2$ eine Höhe des vorletzten Reflektors (C) und $H_3$ eine Höhe des letzten Reflektors (B) ist.

4. Einrichtung nach Anspruch 3, umfassend einen ersten Wellenleiter (25) zum Leiten der ersten emittierten Ultraschallwelle und der ersten reflektierten Welle, und einen zweiten Wellenleiter (26) zum Leiten der zweiten emittierten Ultraschallwelle und der zweiten sowie dritten reflektierten Welle.

5. Einrichtung nach Anspruch 4, bei welcher zumindest ein Reflektor (B, C, D, E, F) durch ein flaches Blatt gebildet ist, welches in zwei einander zugewandte, jeweils einander gegenüberliegend auf der gleichen Höhe in dem zweiten Wellenleiter ausgebildete Schlitze eingreift.

6. Einrichtung nach Anspruch 5, bei welcher wenigstens ein Reflektor (A) durch eine Scheibe gebildet ist, die wenigstens eine Öffnung aufweist.

7. Einrichtung nach einem der Ansprüche 4 bis 6, bei welcher die Wellenleiter (25, 26) jeweils mehrere Teilstücke aufweisen, die über konische Abschnitte miteinander verbunden sind.

8. Einrichtung nach einem der Ansprüche 4 bis 7, dadurch **gekennzeichnet**, daß die Wellenleiter (25, 26) jeweils mehrere aneinandergrenzende Teilstücke aufweisen, wobei jedes Teilstück im Bereich jedes seiner Enden einen Kreisring (31, 32) aufweist, wobei ferner die beiden Leiter aneinanderliegend angeordnet sind und die beiden Endringe (31B, 31A) eines Teilstückes des ersten Leiters und eines parallelen Teilstückes des zweiten Leiters ebenso wie die beiden Endringe (32B, 32A) der anschließenden Teilstücke des ersten Leiters und des zweiten Leiters aneinandergelegt sind, wobei die vier Ringe (31A, 31B, 32A, 32B) durch einen Spannring (33, 34) zusammengehalten werden.

9. Einrichtung nach Anspruch 8, bei der dieser Spannring zwei Bügel (33, 34) umfaßt, die durch zwei Bolzen (35, 36) zusammengespannt werden.

10. Einrichtung nach einem der Ansprüche 3 bis 9, dadurch **gekennzeichnet**, daß die Abstände zwischen den Reflektoren (A-F) entlang ihrer Ausrichtung betrachtet in der Ausbreitungsrichtung der emittierten Wellen größer werden.

## Claims

1. A method of locating an interface (8) between a liquid (10) and another fluid (9), liquid or gas, comprising the following steps:

   emitting a first emitted ultrasound wave from a first reference point (27) situated in the liquid (10) towards said interface (8), said first emitted ultrasound wave producing a first reflected wave on said interface (8);

   receiving said first reflected wave at said first reference point (27);

   measuring a measurement path travel time $t$ that elapses between the emission of said first emitted ultrasound wave and the reception of said first reflected wave;

   emitting a second emitted ultrasound wave from a second reference point (28) situated in the liquid (10) towards said interface (8), said second reference point (8) being horizontally aligned with the first reference point (27), reflectors (A-F) being disposed in vertical alignment with the second reference point (28) between said second reference point (28) and said interface (8), said reflectors (A-F) including a last reflector (B) and a last-but-one reflector (C) encountered by said second ultrasound wave between said second reference point (28) and said interface (8), said second ultrasound wave producing a second wave reflected on said last-but-one reflector (C) and a third reflected wave on said last reflector (B);

   receiving said second and third reflected waves at said second reference point (28);

   determining which of the various reflectors (A-F) is the last reflector (B);

   measuring a first reference path travel time $t_3$ between the emission of the second emitted ultrasound wave and the reception of the third reflected wave;

   said method being characterized in that it further includes the following steps:

   measuring a second reference path travel time $t_2$ between the emission of the second emitted ultrasound wave and the reception of the second reflected wave; and

   computing the height H of the interface (8) using the equation:

   $$H = H_3 + (H_3 - H_2) \times (t - t_3)/(t_3 - t_2)$$

   where:

   $H_2$ is a height of the last-but-one reflector (C), and

   $H_3$ is a height of the last reflector (B).

2. A method according to claim 1, in which that one of the various reflectors (A-F) which constitutes the last reflector (B) is determined as a function of the measurement path travel time $t$.

3. Apparatus for locating an interface (8) between a liquid (10) and another fluid (9), liquid or gas, the apparatus comprising:

   means for emitting a first emitted ultrasound wave from a first reference point (27) situated in the liquid (10) towards said interface (8), said first emitted ultrasound wave producing a first reflected wave on said interface (8);

   means for receiving said first reflected wave at said first reference point (27);

   means for measuring a measured path travel time $t$ that elapses between emission of said first emitted ultrasound wave and reception of said first reflected wave;

means for emitting a second emitted ultrasound wave from a second reference point (28) situated in the liquid (10) towards said interface (8), said second reference point (28) being horizontally aligned with the first reference point (27), reflectors (A-F) being disposed in vertical alignment with the second reference point (28) between said second reference point (28) and said interface (8), said reflectors (A-F) including a last reflector (B) and a last-but-one reflector (C) encountered by said second ultrasound wave between said second reference point (28) and said interface (8), said second ultrasound wave producing a second reflected wave on said last-but-one reflector (C) and a third reflected wave on said last reflector (B);

means for receiving said second and third reflected waves at said second reference point (28);

means for determining which of the various reflectors (A-F) is the last reflector (B);

means for measuring a first reference path travel time $t_3$ between the emission of the second emitted ultrasound wave and the reception of the third reflected wave;

said apparatus being characterized in that it further includes:

means for measuring a second reference path travel time $t_2$ between the emission of the second emitted ultrasound wave and the reception of the second reflected wave; and

means for computing the height H of the interface (8) by means of the following equation:

$$H = H_3 + (H_3 - H_2) \times (t - t_3)/(t_3 - t_2)$$

where

$H_2$ is a height of the last-but-one reflector (C),

and

$H_3$ is a height of the last reflector (B).

4. Apparatus according to claim 3, including a first waveguide (25) for guiding said first emitted ultrasound wave and said first reflected wave, and a second waveguide (26) for guiding the second emitted ultrasound wave and said second and third reflected waves.

5. Apparatus according to claim 4, in which at least one reflector (B, C, D, E, F) is constituted by plane blade, engaged in two opposite slots formed facing each other at the same level in the second waveguide.

6. Apparatus according to claim 5, in which at least one reflector (A) is constituted by a disk including at least one opening.

7. Apparatus according to any one of claims 4 to 6, in which each of the waveguides (25, 26) includes a plurality of lengths interconnected by conical sections.

8. Apparatus according to any one of claims 4 to 7, characterized in that each of the waveguides (25, 26) includes a plurality of juxtaposed lengths, each length including a circular ring (31, 32) in the vicinity of each of its ends, the two waveguides being placed close to each other by putting the two end rings (31B, 31A) of a length of the first waveguide and of a parallel length of the second waveguide against each other and so as to put the two end rings (32B, 32A) of the adjacent lengths of the first waveguide and of the second waveguide against each other, the four rings (31A, 31B, 32A, 32B) being held together by a clamp (33, 34).

9. Apparatus according to claim 8, in which said clamp includes two stirrup members (33, 34) clamped together by two bolts (35, 36).

10. Apparatus according to any one of claims 3 to 9, characterized in that the distance between the reflectors (A-F) in their alignment direction increase in the propagation direction of the emitted waves.

# FIG .1

FIG.2

FIG.3

EP 0 571 519 B1

FIG.4A

A

A

FIG.4B

B

B

FIG.4C

C

C

FIG. 4D

FIG.4F

FIG.4E

FIG.4 G